# EUROPÄISCHE PATENTSCHRIFT

(11) **EP 2 856 623 B1**
(45) Veröffentlichungstag und Bekanntmachung des Hinweises auf die Patenterteilung: **26.09.2018**
(21) Anmeldenummer: 12727591.5
(22) Anmeldetag: 24.05.2012
(51) Int. Cl.: H02K 24/00

(54) **ELEKTRISCHE MASCHINE**
ELECTRICAL MACHINE
MACHINE ÉLECTRIQUE

(43) Veröffentlichungstag der Anmeldung: 08.04.2015
(73) Patentinhaber: Baumüller Nürnberg GmbH, 90482 Nürnberg (DE)
(72) Erfinder: VEEH, Michael, 97271 Kleinrinderfeld (DE)
(74) Vertreter: FDST Patentanwälte
(86) Internationale Anmeldenummer: PCT/EP2012/002215
(87) Internationale Veröffentlichungsnummer: WO 2013/174405

(56) Entgegenhaltungen:
- EP-A1- 2 197 092
- US-A1- 2005 109 584

## Beschreibung

Die Erfindung betrifft eine elektrische Maschine mit in einem Maschinengehäuse einem Maschinenstator und einem Maschinenrotor auf einer Maschinenwelle, deren Wellenende im Bereich eines Lagerschildes aus dem Maschinengehäuse herausgeführt ist. Eine derartige elektrische Maschine ist aus der EP 2 197 092 A1 bekannt. Unter elektrischer Maschine, die auch ein Generator sein kann, wird insbesondere ein Elektromotor, vorzugsweise eine bürstenloser Elektromotor, verstanden.

Eine derartige elektrische Maschine wird häufig als Roboterantrieb eingesetzt. Die hierzu als Elektromotor arbeitende Maschine weist in einem Maschinen- bzw. Motorgehäuse eine Welle auf, die einen von einem gehäusefesten Stator umgebenen Rotor oder Läufer trägt. Die nachfolgend auch als Antriebswelle bezeichnete Maschinen- bzw. Motorwelle ist antriebsseitig (A-seitig) mit einem anzutreibenden Maschinenteil, beispielsweise mit einem Roboterbauteil, gekoppelt und zumindest auf der gegenüberliegenden Wellenseite (B-seitig) in einem entsprechend B-seitigen Lager drehbar gelagert. In diesem Bereich eines üblicherweise B-seitigen Lagerschildes ist ein Wellenende (Wellenstummel) der Maschinenwelle aus dem Maschinengehäuse herausgeführt.

Dieses B-seitige Wellenende wird im Rahmen einer Not- oder Sicherheitsdrehvorrichtung genutzt, um im Notfall mit betätigter Haltebremse die Antriebswelle manuell drehen und somit das angetriebene Maschinen- bzw. Roboterteil aus einer unerwünschten Stellung in eine sicherer Stellung zu bewegen. Hierzu ist das Wellenende direkt mit einem Außensechskant oder zumindest zwei zueinander parallelen Schlüsselflächen als Wirkflächen für ein Handhabungswerkzeug versehen.

Mittels des Handhabungswerkzeugs (Gabel-, Steck- oder Ringschlüssel) wird im Notfall ein Drehmoment, das größer als das Haltemoment einer motorinternen Bremseinrichtung ist, in die Antriebswelle eingebracht, um das mittels der Bremseinrichtung gesicherte Maschinen- bzw. Roboterteil langsam und gezielt aus der aktuellen Lage, insbesondere einer Gefahrenlage, zu verschwenken. Aufgrund des üblicherweise nur relativ geringen Wellendurchmessers im Bereich des Wellenendes von beispielsweise 12mm können aufgrund der im Zuge der Notbetätigung in das Wellenende eingebrachten hohen Flächenlast plastische Verformungen der Kanten der wellenendseitigen Wirkflächen auftreten. Dies hat zu Folge, dass die Wirkflächen vom Handhabungswerkzeug nicht mehr zuverlässig formschlüssig aufgenommen werden, so dass das Werkzeug mit abnehmender Drehmomenteinleitung in die Antriebswelle mehrfach angesetzt werden muss. Bei einmal verformten Wirkflächen ist der Motor aus Sicherheitsgründen praktisch nicht mehr einsetzbar, oder es muss zumindest dessen Antriebswelle ausgetauscht werde, was äußerst aufwendig und daher unerwünscht ist.

Bei der aus der eingangs genannten EP 2 197 092 A1 bekannten elektrischen Maschine trägt das Wellenende der Maschinenwelle eine Schraubenmutter, die zur manuellen Verdrehung der Maschinenwelle verwendtbar ist.

Der Erfindung liegt die Aufgabe zugrunde, eine elektrische Maschine, insbesondere für einen Roboterantrieb, mit verbesserter Not- bzw. Sicherheitsdrehvorrichtung anzugeben.

Diese Aufgabe wird bei einer elektrischen Maschine der eingangs genannten Art erfindungsgemäß gelöst durch die Merkmale des Anspruchs 1. Vorteilhafte Ausgestaltungen und Weiterbildungen sind Gegenstand der Unteransprüche.

Hierzu weist die elektrische Maschine in einem Maschinengehäuse einen Maschinenstator und einen Maschinenrotor auf einer Maschinenwelle auf, deren Wellenende im Bereich eines Lagerschildes aus dem Maschinengehäuse herausgeführt ist, wobei die elektrische Maschine zur Erfassung der Winkellage der Maschinenwelle einen Resolver mit einem gehäusefesten Resolverstator und mit einem wellenfesten Resolverrotor aufweist, und wobei der Resolverrotor selbst für eine Verdrehung (Not- bzw. Sicherheitsverdrehung) der Maschinenwelle vorgesehen und eingerichtet. Hierzu ist an den Resolverrotor zum Wellenfreiende hin ein Rotorzapfen mit einem Außenmehrkant angeformt, der die Wirkflächen für ein Handhabungswerkzeug bildet.

Der Resolverrotor ist vorzugsweise mittels einer Passfederverbindung mit der Maschinenwelle zusätzlich drehgesichert, um das im Zuge der Not- bzw. Sicherheitsverdrehung aufgebrachte Drehmoment zerstörungsfrei auf die Maschinenwelle und über diese an das zu sichernde Maschinenteil zu übertragen.

Geeigneterweise ist als äußerer axialer Drehanschlag ein Sicherungsring vorgesehen, der wellenendseitig in mindestens einer Wellennut einsitzt und sich in Radialrichtung sowie zumindest über einen Teil des Wellenumfangs erstreckt.

Zur Erzeugung eines im Not- oder Sicherungsfall ausreichenden Haltemomentes für ein mit der Antriebswelle gekoppeltes Maschinenteil ist maschinenseitig eine gehäuseinterne Bremsvorrichtung vorgesehen, die ein ausreichendes Haltemoment in die Maschinen- oder Antriebswelle einbringt, um sowohl diese als auch das hiermit gekoppelte Maschinenteil im Zuge dessen Abbremsung in der momentanen Bewegungsposition zu blockieren. Hierzu ist weist die Bremsvorrichtung eine gehäusefeste Bremskomponente und eine wellenfeste Bremskomponente auf, die zwischen dem Maschinenrotor und dem Wellenende auf der Maschinenwelle sitzt.

Bei der Maschine ist die Bremsvorrichtung zwischen dem Resolver und einem Wellenkugellager angeordnet, dessen Lageraußenring zumindest teilweise in einer Lagerringkontur der gehäusefesten Bremskomponente einsitzt. Der verbleibende axiale Ringabschnitt des Lageraußenringes sitzt in einer in die Gehäusezwischenwand eingebrachten radialen Ausnehmung ein und ist dort mittels eines Sicherungsrings axial gesichert. Der Sicherungsring sitzt dabei geeigneterweise in einer Wandnut der Gehäusezwischenwand ein. Während dieser äußere Sicherungsring den Lageraußenring axial sichert, sitzt ein weiterer Sicherungsring für den Lagerinnenring des Kugellagers zu dessen axialen Lagesicherung in einer Wellennut der Maschinewelle ein.

Im Zuge einer Drehbewegung des Außenmehrkants des Rotorzapfen mittels eines Handhabungswerkzeugs kann die Antriebswelle manuell gezielt gedreht und somit das mit dieser gekoppelte Maschinenteil aus der aktuellen Position heraus bewegt werden. Das in die Antriebswelle eingebrachte Drehmoment muss dabei größer sein als das von der Bremsvorrichtung erzeugte Haltemoment. Mit der an den Resolverrotor angeformten oder angesetzten Wirkflächen in Form des Außenmehrkants ist die Wirkfläche für ein zur Not- oder Sicherheitsdrehung der Maschinenwelle vorgesehenes Handhabungswerkzeug vergrößert.

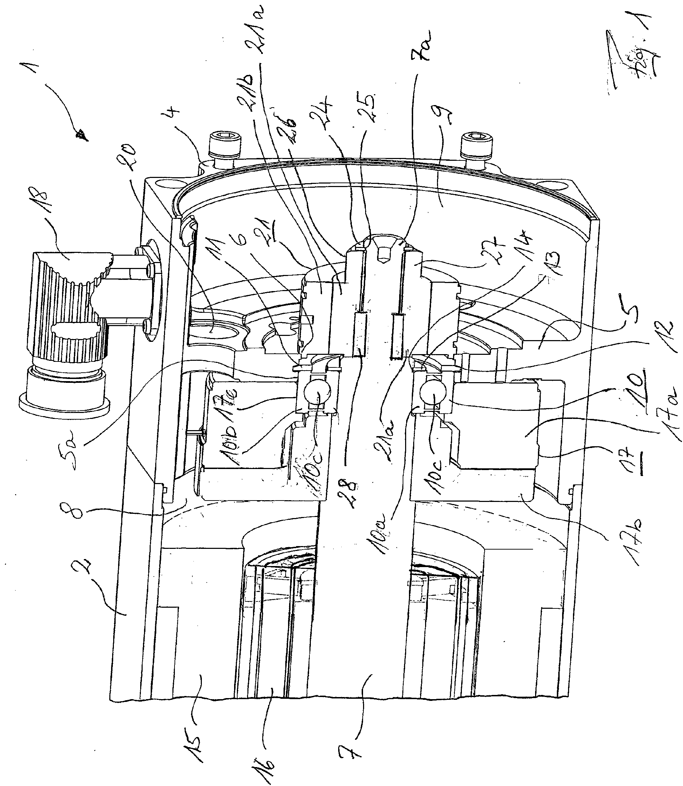

Nachfolgend werden Ausführungsbeispiele der Erfindung anhand einer Zeichnung näher erläutert. Darin zeigt die einzige Figur 1 ausschnittsweise in einem Längsschnitt einen Elektromotor mit einem Gehäuse bei abgenommenem B-seitigen Lagerschild und mit einem wellenendseitigen Resolver mit an dessen Resolverrotor angeformten Wirkflächen für eine manuelle Not- oder Sicherheitsdrehung der zentralen Antriebswelle.

Die Figur zeigt einen Elektromotor als elektrische Maschine 1 mit einem Maschinengehäuse 2 mit einem nicht erkennbaren A-seitigen Anschluss- oder Gehäuseflansch sowie axial gegenüberliegend einem B-seitigen Anschluss- bzw. Gehäuseflansch 4 für ein B-seitiges Lagerschild. In diesem Bereich des B-seitigen Anschlussflansches 4 weist das Maschinen- oder Motorgehäuse 2 eine eingezogene, nachfolgend auch als Zwischenwand bezeichnete Gehäusezwischenwand 5 auf, in die eine zentrale Durchgangsöffnung 6 eingebracht ist. Über diese Durchgangs- oder Wandöffnung 6 ist ein Wellenende 7a einer Antriebswelle 7 in den Bereich des nicht dargestellten B-seitigen Lagerschildes geführt. Dort ist das Wellenende 7a bei abgenommenem B-seitigen Lagerschild zugänglich.

Die Gehäusezwischenwand 5 trennt einen Gehäuseinnenraum 8 vom nachfolgend als Gehäuseraum bezeichneten B-seitigen Lagerschildraum 9 des Motorgehäuses 2. B-seitig der Gehäusezwischenwand 5 erstreckt sich das Wellenende 7a in den lagerschildseitigen Gehäuseraum 9 hinein. Der Wellendurchmesser des B-seitigen Wellenendes 7a ist kleiner als der Wellendurchmesser der sich zentral innerhalb des Motorgehäuses 2 axial erstreckenden Antriebswelle 7. Diese ist in einem im Bereich der Gehäusezwischenwand 5 angeordneten B-seitigen Kugellager 10 mit einem Lagerinnenring 10a und mit einem Lageraußenring 10b sowie dazwischen angeordneten Wälzkörpern 10c gelagert. Der gehäusefeste Lageraußenring 10b ist mittels eines Sicherungsrings 11 axial gesichert, der im Bereich der Durchgangsöffnung 6 in einer dortigen Gehäusenut 12 der Zwischenwand 5 einsitzt. Der wellenfeste Lagerinnenring 10a des Kugellagers 10 ist ebenfalls mit einem Sicherungsring 13 axial gesichert, der in einer in die Antriebswelle 7 eingebrachten Wellennut 14 einsitzt.

Im Gehäuseinnenraum 8 ist zwischen der Zwischenwand 5 und einem von einem gehäusefesten Stator 15 umgebenen wellenfesten Rotor 16 eine Bremsvorrichtung 17 mit einer gehäusefesten Bremsenkomponente 17a und mit einer mit dieser zusammenwirkenden wellenfesten Bremsenkomponente 17b angeordnet.

Auf einer Seite des Maschinengehäuses 2 an dieses mittels Schraubverbindungen angeflanschte, L-förmige Anschlussgehäuse 18 dienen zur Durchführung von Steuer-, Sensor- und/oder Motoranschlüssen. Dabei mündet das Anschlussgehäuse 18 in den B-seitigen Gehäuseraum 9 ein, während ein weiteres, nicht sichtbares Anschlussgehäuse in den Motorinnenraum 8 einmündet und dort zur Durchführung der Motoranschlüsse dient. Diese sind Teil bzw. nicht näher dargestellte Wicklungsenden einer Statorwicklung des im Ausführungsbeispiel bürstenlosen Elektromotors 1.

Das Anschlussgehäuse 18 dient einerseits zur Durchführung von Signal- und/oder Steuerleitungen für die Bremsvorrichtung 17, wozu in die Zwischenwand 5 entsprechende Durchgangsöffnungen 20 eingebracht sind. Des Weiteren werden über das Anschlussgehäuse 18 Steuer- und Signalleitungen eines innerhalb des B-seitigen Gehäuseraums 9 auf dem Wellenende 7a angeordneten Resolvers 21 mit einem wellenfesten Resolverrotor 21a und einem gehäusefesten Resolverstator 21b geführt.

Statorseitig weist der Resolver 21 in nicht näher dargestellter Art und Weise beispielsweise zwei um 90° gegeneinander versetzte Statorwicklungen auf, während der Resolverrotor 21a beispielsweise eine über Schleifringe und Bürsten nach außen geführte Rotorwicklung aufweist. Auch kann der Resolver 21 bürstenlos sein, wobei dann die Information des Resolverrotors 21a beispielsweise induktiv übertragen wird. Die Statorwicklungen werden mit gegeneinander um 90° versetzten sinusförmigen Wechselspannungen erregt, so dass die Phasenlage der in der Rotorwicklung induzierten Spannung von der Stellung des wellenfesten Resolverrotors 21a und damit der Antriebswelle 7 abhängt. Der vom Resolver 21 gebildete Winkel liefert somit während jeder Wellenumdrehung ein Sensorsignal, dessen Phasenlage in Bezug auf ein Erregersignal der statorseitigen Erregerwicklungen ein Maß für die Winkellage des Resolverrotors 21a und damit der Antriebswelle 7 ist.

Der Lageraußenring 10b des zwischen der Bremsvorrichtung 17 und dem Resolver 21 angeordneten Wellenkugellager 10 sitzt teilweise in einer Lagerkontur 17c der gehäusefesten Bremsenkomponente 17a und teilweise in einer Lagerkontur 5a der Gehäusezwischenwand 5 ein. Der Resolverstator 21b des im Gehäuseraum 9 angeordneten Resolvers 21 ist mit der Gehäusezwischenwand 5 ortsfest verbunden.

Wellenendseitig sitzt ein Sicherungsring 24 in einer wellenendseitig in das Wellenende 7a eingebrachten Wellennut 25 ein. Ein Außensechskant mit entsprechend sechs Wirkflächen 26 ist an einem Rotorzapfen oder Ansatz 27 des wellenfesten Resolverrotors 21b vorgesehen. An diesen Wirkflächen 26 greift in nicht näher dargestellter Art und Weise ein Handhabungswerkzeug in Form eines Maul-, Ring- oder Steckschlüssels an, um die Antriebswelle 7 im Not- oder Sicherheitsfall manuell zu drehen und somit ein mit der Antriebswelle 7 A-seitig gekoppeltes Maschinenteil, beispielsweise einen Roboterarm, manuell zu bewegen. Der Resolverrotors 21b ist wellenendseitig mittels des Sicherungsringes 24 zur Bildung eines axialen Drehanschlags gesichert. Eine zusätzliche Passfederverbindung 28 mit der Antriebswelle 7 sichert zusätzlich die wellenfeste Verbindung zwischen dem Resolverrotor 21a und dem Wellenende 7a gegen eine Axialverschiebung.

Im Zuge einer Drehbewegung des Resolverrotors 21a wird über dessen Wirkflächen 26 mittels des Handhabungswerkzeug ein zur Überwindung des von der Bremsvorrichtung 17 erzeugten Haltemomentes sowie zur manuellen Bewegung des mit der Antriebswelle 7 gekoppelten Maschinenteils ausreichendes Drehmoment in die Antriebswelle 7 eingeleitet. Dabei ist aufgrund des im Vergleich zum Wellendurchmesser im Bereich des Wellenendes 7a großen Durchmessers des Resolveransatzes 27 eine Verformung dessen Wirkflächen 26 nur äußerst unwahrscheinlich oder sogar zuverlässig unterbunden.

### Bezugszeichenliste

| | | | |
|---|---|---|---|
| 1 | Maschine/Elektromotor | 24 | Sicherungsring |
| 2 | Maschinen-/Motorgehäuse | 25 | Wellennut |
| 4 | B-seitiger Gehäuseflansch | 26 | Wirkfläche/Außensechskant |
| 5 | Zwischenwand | 27 | Rotorzapfen |
| 6 | Durchgangsöffnung | 28 | Passfederverbindung |
| 7 | Antriebswelle | | |
| 7a | Wellenende | | |
| 8 | Gehäuseinnenraum | | |
| 9 | Lagerschild-/Gehäuseraum | | |
| 10 | Kugellager | | |
| 10a | Lagerinnenring | | |
| 10b | Lageraußenring | | |
| 10c | Wälzkörper | | |
| 11 | Sicherungsring | | |
| 12 | Gehäusenut | | |
| 13 | Sicherungsring | | |
| 14 | Wellennut | | |
| 15 | Stator | | |
| 16 | Rotor | | |
| 17 | Bremsvorrichtung | | |
| 17a | gehäusefeste Bremsenkomponente | | |
| 17b | wellenfeste Bremsenkomponente | | |
| 17c | Lagerkontur | | |
| 18 | Anschlussgehäuse | | |
| 19 | Anschlussgehäuse | | |
| 20 | Durchgangsöffnung | | |
| 21 | Resolver | | |
| 21a | Resolverrotor | | |
| 21b | Resolverstator | | |

## Patentansprüche

1. Elektrische Maschine (1) mit in einem Maschinengehäuse (2) einem Maschinenstator (15) und einem Maschinenrotor (16) auf einer Maschinenwelle (7), deren Wellenende (7a) im Bereich eines Gehäuseraums (9) für ein Lagerschild aus dem Maschinengehäuse (2) herausgeführt ist und zur Erfassung der Winkellage der Maschinenwelle (7) einen Resolver (21) mit einem gehäusefesten Resolverstator (21a) und mit einem wellenfesten Resolverrotor (21b) trägt, **dadurch gekennzeichnet, dass** an den Resolverrotor (21a) ein sich zum Freiende des Wellenendes (7a) erstreckender Rotorzapfen (27) mit einem Außenmehrkant (26') zum Zwecke einer manuellen Verdrehung der Maschinenwelle (7) angeformt ist.

2. Elektrische Maschine (1) nach Anspruch 1,
**dadurch gekennzeichnet,**
**dass** der Resolverrotor (21a) mittels einer Passfederverbindung (28) mit dem Wellenende (7a) der Maschinenwelle (7) drehgesichert ist.

3. Elektrische Maschine (1) nach Anspruch 1 oder 2,
**dadurch gekennzeichnet,**
**dass** das Wellenende (7a) die Maschinenwelle (7) freiendseitig eine Wellennut (25) aufweist, in der ein Sicherungsring (24) als äußerer, axialer Drehanschlag einsitzt.

4. Elektrische Maschine (1) nach einem der Ansprüche 1 bis 3,
**gekennzeichnet durch**
eine gehäuseinterne Bremsvorrichtung (17) mit einer gehäusefesten Bremsenkomponente (17a) und mit einer wellenfesten Bremsenkomponente (17b), die zwischen dem Maschinenrotor (16) und dem Wellenende (7a) auf der Maschinenwelle (7) sitzt.

5. Elektrische Maschine (1) nach Anspruch 4,
**gekennzeichnet durch**
ein zwischen der Bremsvorrichtung (17) und dem Resolver (21) angeordneten Wellenkugellager (10), dessen Lageraußenring (10b) zumindest teilweise in einer Lagerkontur (17c) der gehäusefesten Bremsenkomponente (17a) einsitzt.

6. Elektrische Maschine (1) nach einem der Ansprüche 1 bis 5,
**gekennzeichnet durch**
eine Gehäusezwischenwand (5) mit einer Gehäuseöffnung (6), über welche das Wellenende (7a) in den, vorzugsweise B-seitigen, Gehäuseraum (9) geführt ist.

7. Elektrische Maschine (1) nach Anspruch 6,
**dadurch gekennzeichnet,**
**dass** der Lageraußenring (10b) des Kugellagers (10) teilweise in einer Lagerkontur (5a) der Gehäusezwischenwand (5) einsitzt.

8. Elektrische Maschine (1) nach einem der vorhergehenden Ansprüche,
**dadurch gekennzeichnet,**
**dass** der Resolverstator (21b) des im Gehäuseraum (9) angeordneten Resolvers (21) mit der Gehäusezwischenwand (5) ortsfest verbunden ist.

## Claims

1. Electrical machine (1) comprising, in a machine housing (2), a machine stator (15) and a machine rotor (16) on a machine shaft (7), the shaft end (7a) of which machine shaft is routed out of the machine housing (2) in the region of a housing space (9) for an end plate and, for the purpose of detecting an angular position of the machine shaft (7), is fitted with a resolver (21) having a resolver stator (21a) which is fixed to the housing and having a resolver rotor (21b) which is fixed to the shaft, **characterized in that** a rotor pin (27), which extends towards the free end of the shaft end (7a) and has an external polygonal shape (26') for the purpose of manual rotation of the machine shaft (7), is integrally formed on the resolver rotor (21a) .

2. Electrical machine (1) according to Claim 1, **characterized in that** the resolver rotor (21a) is secured in respect of rotation by means of a feather key connection (28) to the shaft end (7a) of the machine shaft (7).

3. Electrical machine (1) according to Claim 1 or 2, **characterized in that** the shaft end (7a) the machine shaft (7) has a shaft groove (25) at the free end side, a securing ring (24) being seated in the said shaft groove as an outer, axial rotary stop.

4. Electrical machine (1) according to one of Claims 1 to 3, **characterized by** a housing-internal brake apparatus (17) having a brake component (17a) which is fixed to the housing and having a brake component (17b) which is fixed to the shaft and is seated on the machine shaft (7) between the machine rotor (16) and the shaft end (7a).

5. Electrical machine (1) according to Claim 4, **characterized by** a shaft ball bearing (10) which is arranged between the brake apparatus (17) and the resolver (21) and the bearing outer ring (10b) of which shaft ball bearing is at least partially seated in a bearing contour (17c) of the brake component (17a) which is fixed to the housing.

6. Electrical machine (1) according to one of Claims 1 to 5, **characterized by** a housing intermediate wall (5) having a housing opening (6) via which the shaft end (7a) is guided into the, preferably B-side, housing space (9).

7. Electrical machine (1) according to Claim 6, **characterized in that** the bearing outer ring (10b) of the ball bearing (10) is partially seated in a bearing contour (5a) of the housing intermediate wall (5).

8. Electrical machine (1) according to one of the preceding claims, **characterized in that** the resolver stator (21b) of the resolver (21) which is arranged in the housing space (9) is connected in a positionally fixed manner to the housing intermediate wall (5).

## Revendications

1. Machine électrique (1) comprenant, dans un boîtier de machine (2), un stator de machine (15) et un rotor de machine (16) sur un arbre de machine (7), dont l'extrémité d'arbre (7a) est guidée hors du boîtier de machine (2) dans la région d'un espace de boîtier (9) pour un flasque et, pour détecter la position angulaire de l'arbre de machine (7), porte un résolveur (21) avec un stator de résolveur (21a) fixé au boîtier (21a) et avec un rotor de résolveur (21b) fixé à l'arbre, **caractérisée en ce qu'**un tourillon de rotor (27) avec un profil extérieur polygonal (26'), s'étendant jusqu'à l'extrémité libre de l'extrémité d'arbre (7a), est formé sur le rotor de résolveur (21a) afin de permettre une rotation manuelle de l'arbre de machine (7).

2. Machine électrique (1) selon la revendication 1, **caractérisée en ce que** le rotor de résolveur (21a) est fixé en rotation au moyen d'une connexion à ressort d'ajustement (28) à l'extrémité d'arbre (7a) de l'arbre de machine (7).

3. Machine électrique (1) selon la revendication 1 ou 2, **caractérisée en ce que** l'extrémité d'arbre (7a) l'arbre de machine (7) présente du côté de l'extrémité libre une rainure d'arbre (25) dans laquelle s'insère une bague de fixation (24) en tant que butée extérieure axiale antirotation.

4. Machine électrique (1) selon l'une quelconque des revendications 1 à 3, **caractérisée par** un dispositif de frein (17) interne au boîtier avec un composant de frein (17a) fixé au boîtier et un composant de frein (17b) fixé à l'arbre qui repose entre le rotor de machine (16) et l'extrémité d'arbre (7a) sur l'arbre de machine (7).

5. Machine électrique (1) selon la revendication 4, **caractérisée par** un roulement à billes d'arbre (10) disposé entre le dispositif de frein (17) et le résolveur (21), dont la bague de palier extérieure (10b) s'insère au moins en partie dans un contour de palier (17c) du composant de frein (17a) fixé au boîtier.

6. Machine électrique (1) selon l'une quelconque des revendications 1 à 5, **caractérisée par** une paroi intermédiaire de boîtier (5) avec une ouverture de boîtier (6) par le biais de laquelle l'extrémité d'arbre (7a) est guidée dans l'espace de boîtier (9) de préférence du côté B.

7. Machine électrique (1) selon la revendication 6, **caractérisée en ce que** la bague de palier extérieure (10b) du roulement à billes (10) s'insère en partie dans un contour de palier (5a) de la paroi intermédiaire de boîtier (5).

8. Machine électrique (1) selon l'une quelconque des revendications précédentes, **caractérisée en ce que** le stator de résolveur (21b) du résolveur (21) disposé dans l'espace de boîtier (9) est connecté fixement à la paroi intermédiaire de boîtier (5).
